# EUROPEAN PATENT SPECIFICATION

(11) **EP 3 791 567 B1**
(45) Date of publication and mention of the grant of the patent: **14.09.2022**
(21) Application number: 19749093.1
(22) Date of filing: 18.07.2019
(51) Int. Cl.: H04N 1/405

(54) **MEMORY DEVICE COMPRISING COEFFICIENTS FOR HALFTONING**
SPEICHERVORRICHTUNG MIT KOEFFIZIENTEN ZUR RASTERUNG
DISPOSITIF DE MÉMOIRE COMPRENANT DES COEFFICIENTS POUR UNE CRÉATION DE DEMI-TONS

(43) Date of publication of application: 17.03.2021
(73) Proprietor: HEWLETT-PACKARD DEVELOPMENT COMPANY, L.P., Spring, TX 77389 (US)
(72) Inventor: NELSON, Terry M., Boise Idaho 83714-1021 (US); SHAW, Mark Q., Boise Idaho 83714-1021 (US)
(74) Representative: Liesegang, Eva
(86) International application number: PCT/US2019/042443
(87) International publication number: WO 2021/011008

(56) References cited:
- EP-A1- 3 267 672
- EP-A2- 0 487 084
- US-B1- 6 320 605

## Description

### Background

Halftoning is a technique of simulating grey level printing by a printing device (e.g., a laser printer) that does not support grey level printing. Grey level printing refers to the ability to print a continuous range of tones (grey levels) from white to black. An example of a system that is able to present true continuous range of tones (grey levels) includes a display device or a silver halide photographic medium.

EP 3 267 672 A1 describes a print cartridge which includes a memory device with data to reconstruct a color table for a printing device. The data include a compressed bitstream stored in the memory device with a plurality of quantized coefficients from a lossy compression of a plurality of difference nodes of a difference color table at a selected step size.

US6320605 discloses an image processing apparatus for performing pulse-width modulation processing based on input image data. A maximum pulse width of a pulse signal, which can be outputted as a modulation signal obtained by the pulse width modulation, is changed in accordance with an image processing mode.

### Brief Description of the Drawings

Some implementations of the present disclosure are described with respect to the following figures.
Fig. 1 is a block diagram of a printing device according to some examples.
Fig. 2 is a schematic diagram of a halftone screen including halftone cells according to some examples.
Fig. 3 illustrates a halftone table according to some examples.
Fig. 4 is a plot of a tone curve according to some examples.
Fig. 5 is a flow diagram of a process of constructing information relating to halftoning, according to some examples.
Fig. 6 is a flow diagram of a process of reconstructing halftoning information according to some examples.
Figs. 7 and 8 are block diagrams of printing device components according to some examples.
Fig. 9 is a block diagram of a print cartridge according to some examples.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### Detailed Description

In the present disclosure, use of the term "a," "an", or "the" is intended to include the plural forms as well, unless the context clearly indicates otherwise. Also, the term "includes," "including," "comprises," "comprising," "have," or "having" when used in this disclosure specifies the presence of the stated elements, but do not preclude the presence or addition of other elements.

Laser printers (or other types of printing devices) are able to generate an image on a print medium (e.g., paper, transparency, or any other type of medium). A printing device can selectively apply a toner, ink, or other print material to the print medium based on control of an array of pixels corresponding the image to be formed on the print medium.

A printing device is able to change the power applied to each pixel to obtain any combination of power patterns applied to pixels, to allow the use of halftoning when printing. The changing of the power applied to each pixel is based on use of pulse width modulation (PWM) of the pixel. PWM refers to a technique for adjusting an amount of power applied to a pixel, by dividing a signal used to control power delivered to the pixel into multiple parts in which some of the parts (one part or multiple parts) of the signal is (are) turned on while other parts (one part or multiple parts) of the signal is (are) turned off. The selective control of power applied to different pixels allows for different patterns (that correspond to different grey levels) to be produced for use in halftone printing.

Halftoning can involve an application of a two-dimensional (2D) PWM to pixels (arranged in a 2D array) to generate different grey levels in an image printed by a printing device. 2D PWM includes controlling PWM applied to a 2D array of pixels that form a halftone cell.

In some examples, a halftoning process can be defined by the following characteristics: a halftone geometry (e.g., frequency of a signal applied to a pixel, an angle of a halftone cell, and/or tiling used), a dot shape of a halftone cell (e.g., a parallelogram shape, an elliptical shape, etc.), and a tone curve.

An example of a halftone geometry is described in U.S. Patent No. 4,185,304, which describes halftoning based on tessellation of parallelograms. A first parallelogram can be defined by two vectors, referred to as W and Z vectors. The other parallelograms are aligned to the first parallelogram based on their geometric shape. Each parallelogram (that forms a halftone cell) includes a number of cells representing respective pixels. Multiple halftone cells collectively form a halftone screen with respect to which halftoning can be applied.

In other examples, other techniques can be used to define other halftone geometries, which can have geometries different from a parallelogram.

A tone curve can refer to a plot of tone levels (grey levels represented by PWM values, for example) of a pixel as the tone levels ramp from a minimum to a maximum for a given color. For example, the tone levels can range between 0 and 255, or between a normalized range of 0 and 1, as examples. The tone curve maps a "darkness" or "colorfulness" of a given color to the different tone levels. The tone curve provides a representation of how fast a halftone screen (that includes a tessellation of halftone cells) can ramp from white to black, for example, or more generally from a lighter color to a darker color.

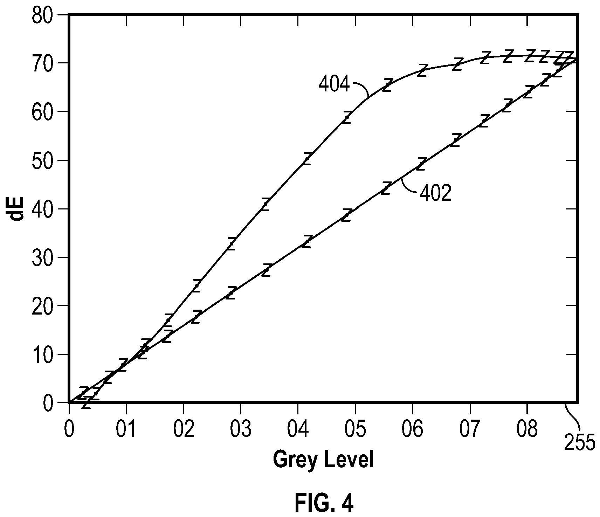

An example of a tone curve is depicted in Fig. 4, discussed further below.

Although reference is made to a "tone curve" in some examples, it is noted that the relationship of tone levels to the "darkness" or "colorfulness" of a given color can be represented using another form of a tone representation.

Traditionally, information relating to halftones (such as the dot shape and tone curve information) are stored in a storage medium of a printing device. For example, the information relating to the halftones can be stored in firmware (including machine-readable instructions) that is stored in the storage medium of the printing device. The storage medium can include a nonvolatile memory, such as a flash memory device, a disk-based storage medium, or any other type of nonvolatile memory.

To avoid having to store a large amount of halftone information in the storage medium of the printing device, information for the most basic halftones are stored by the printing device. This can mean that information relating to specialized halftones are not stored by the printing device, and as a result, such specialized halftones cannot be used by the printing device. A "specialized halftone" can refer to any halftoning technique that is customized or otherwise targeted for a respective application.

In accordance with some implementations of the present disclosure, techniques or mechanisms store information relating to halftoning in a memory device of a printing device component that is useable in a printing device. The information relating to halftoning that is stored in the memory device of the printing device component does not have to be stored in the storage medium of the printing device. In some examples, a printing device component can include a print cartridge, a print bar, and so forth. In alternative examples, a printing device component can include an integrated circuit (IC) chip that is attachable to a print cartridge or to any other component useable in a printing device.

In some examples, the information relating to halftoning that can be stored in the memory device of the printing device component can include the following: compressed coefficients that, when decompressed by a printing device, form difference entries each representing a difference of a value of a corresponding entry of a halftone table and a value of a corresponding entry of a reference table stored on the printer device; a minimum PWM value for a pixel, and a maximum PWM value for a pixel; and a healing parameter specifying a healing process to apply to a reconstructed halftone table produced using the coefficients. The healing process can include selective use of one or both of the minimum PWM value and the maximum PWM value. The healing process can also include enforcing monotonicity of an increase in PWM values in further examples (discussed further below). The information relating to halftoning stored in the memory device of the printing device component can further include other information (discussed further below).

The compressed coefficients are derived from a compression of a difference table including the difference entries. The compression of the difference table can be a lossy compression in some examples.

Data compression involves encoding information using fewer bits than the original representation. Lossless compression and lossy compression are two forms of data compression. In lossless compression, no digital difference exists between the original data and reconstructed data reconstructed from losslessly compressed data. However, reconstructed data produced from reconstructing lossy compressed data may result in a portion of the original data being lost.

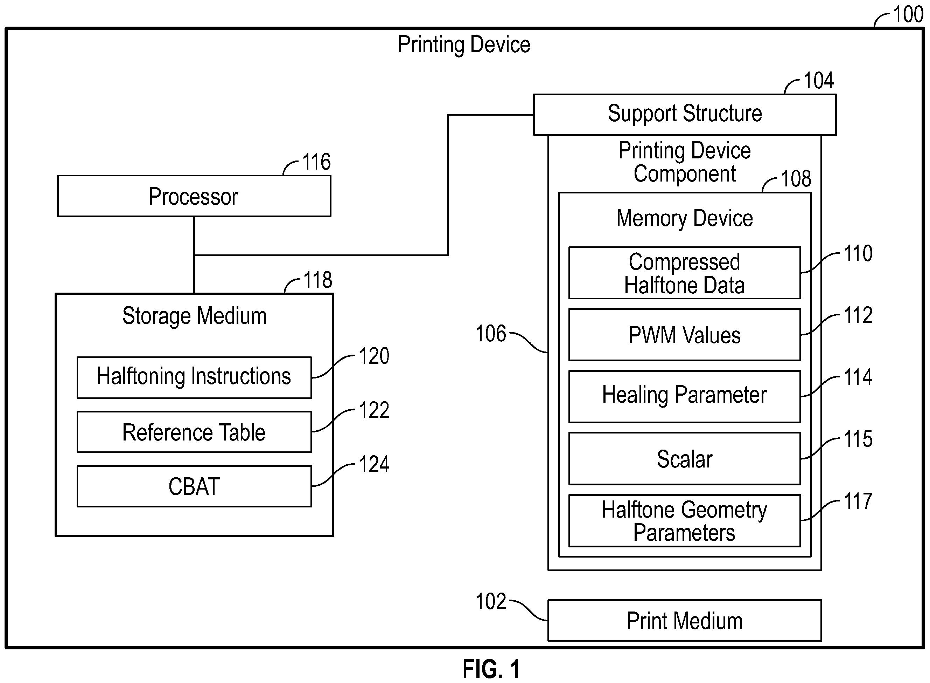

Fig. 1 is a block diagram of a printing device 100, which can be a laser printer or any other type of printer. The printing device 100 can be used to form an image on a print medium 102, such as a paper, a transparency, or any other type of medium.

The printing device 100 includes a support structure 104 to which a printing device component 106 can be attached. As examples, if the printing device component 106 is a print cartridge, then the mounting structure 104 can include a carriage, a print bar, or any other support member to which the print cartridge can be removably or fixedly attached.

In further examples, the printing device component 106 can include an IC chip. In such examples, the mounting structure 104 can include a print cartridge, a carriage, a print bar, or any other component.

The printing device component 106 includes a memory device 108. In some examples, the memory device 108 includes a nonvolatile memory device that maintains data stored in the memory device 108 even when power is removed from the memory device 108 or from the printing device 100. Although referred to in the singular, it is noted that "memory device" can refer to a single memory device or to multiple memory devices.

In accordance with some implementations of the present disclosure, the memory device 108 stores information relating to halftoning, including compressed halftone data 110 (also referred to as "compressed coefficients" as discussed further below), PWM values 112 (such as the minimum PWM value and the maximum PWM value used in a healing process discussed above), a healing parameter 114 that defines a healing process to use, a scalar 115 used to scale data for producing the compressed halftone data 110, and halftone geometry parameters 117 (or more generally, geometry information) that define a geometry of a halftone cell. The memory device 108 can store additional or alternative information.

The printing device 100 includes a processor 116 and a storage medium 118 to which the processor 116 is coupled. A processor can include a microprocessor, a core of a multi-core microprocessor, a microcontroller, a programmable integrated circuit, a programmable gate array, a digital signal processor, or another hardware processing circuit. The storage medium 118 can be implemented using a storage device (or multiple storage devices), including nonvolatile memory devices, disk-based storage devices, solid state storage devices, and/or other types of storage devices.

The storage medium 118 can store various machine-readable instructions, including halftoning instructions 120. The halftoning instructions 120 can be implemented as firmware or software, and can be executed by the processor 116 to perform various tasks. Machine-readable instructions executable on a processor can refer to machine-readable instructions executable on one processor or on multiple processors.

The halftoning instructions 120 are executable on the processor 116 to use the various information (110, 112, 114, 115, 117) and further information stored in the storage medium 118 to perform halftoning when printing an image on the print medium 102. The further information stored in the storage medium 118 that can be used by the halftoning instructions 120 include a reference table 122 and a coefficient bit assignment table (CBAT) 124 (both discussed further below).

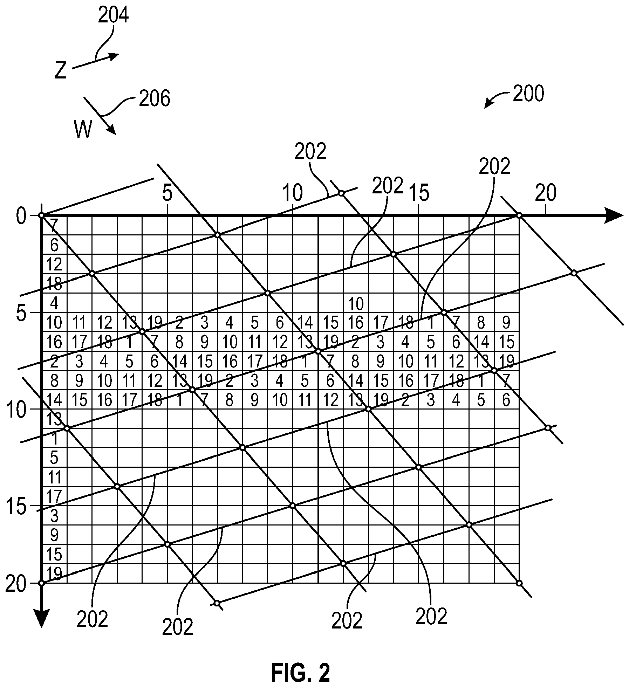

Fig. 2 illustrates an example of a halftone screen 200 that includes a number of halftone cells 202 that are shaped as parallelograms according to some examples. The halftone screen 200 is formed by a tessellation of the halftone cells 202. A halftone cell 202 is defined by a Z vector 204 and a W vector 206. The halftone screen 200 shown in Fig. 2 is according to a halftone screen described in U.S. Patent No. 4,185,304. Although reference is made to a specific halftone geometry, in other examples, other halftone geometries can be employed.

Each halftone cell 202 (having a parallelogram shape) is made up of sub-elements (or pixels) that can be individually blackened (or more generally darkened) to produce a target shade of grey from white (no grey) to all black. In the example of Fig. 2, there are 19 sub-elements within each halftone cell 202. Sub-elements 1-19 are numbered in each halftone cell 202. Some of the sub-elements of the halftone cells 202 shown in Fig. 2 are not numbered to avoid cluttering the drawing.

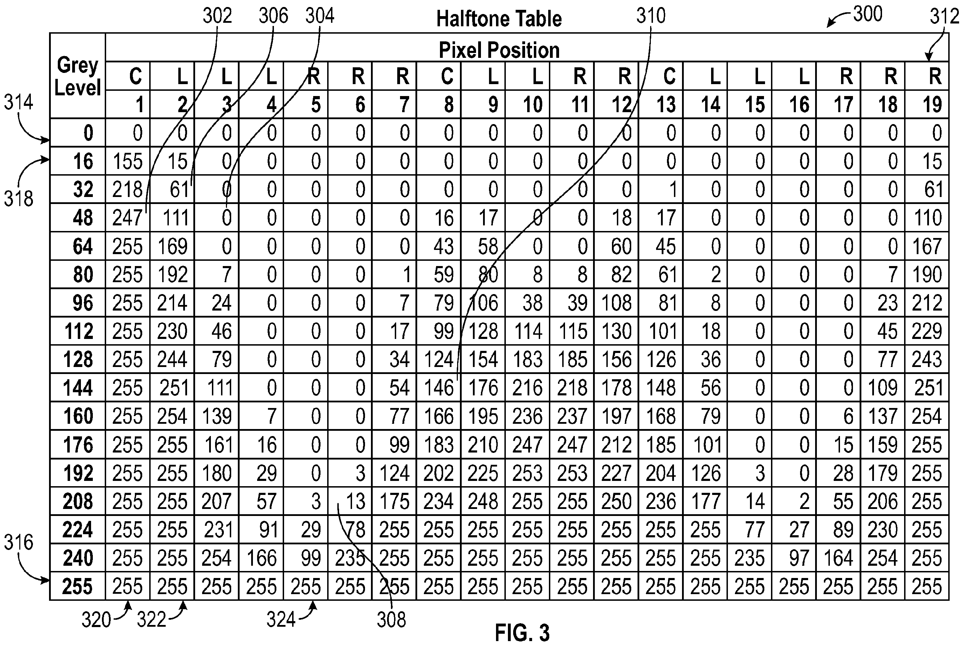

In accordance with some implementations of the present disclosure, the dot shape and tone curve information for each halftone cell 202 can be collectively represented using a halftone table. An example halftone table 300 is shown in Fig. 3.

In other examples, the dot shape and tone curve information can be represented using a different type of data structure.

The halftone table 300 includes 19 columns for the 19 corresponding pixels of a halftone cell 202. Each entry of the halftone table 300 contains a PWM value that represents the PWM control to be applied to the corresponding pixel. In the halftone table 300, an entry 302 includes a PWM value of "247," which represents an amount of PWM applied to pixel 1. The higher the PWM value, the greater the amount of time in a PWM cycle during which the pixel is activated. If the PWM value is set to zero, such as at entry 304, then the corresponding pixel (in this case pixel 3) is off. Other intermediate PWM values are depicted in entries 306, 308, and 310, as examples.

Respective rows of the halftone table 300 represent corresponding grey levels to be achieved by the combination of PWM values assigned to the respective pixels. For example, to achieve a grey level of 0, the PWM values in row 314 for the 19 pixels are used; to achieve a grey level of 255, the PWM values in row 316 for the 19 pixels are used; and to achieve a grey level of 16, the PWM values in row 318 for the 19 pixels are used.

Row 314 in the halftone table 300 indicates that for grey level 0, the PWM values for all 19 pixels are at the "0" value, which indicates that all 19 pixels are off. Row 316 indicates that for grey level 255, the maximum PWM value "255" is used to drive all 19 pixels. The other rows of the halftone table 300 indicates other combinations of PWM values for driving respective pixels to achieve the respective grey levels.

A row 312 in the halftone table 300 indicates a pixel portion with respect to which power indicated by the PWM value is applied. Each pixel has a left portion (L), a center portion (C), and a right portion (R). A value of "L" for a respective pixel indicates that the left portion of the pixel is powered, a value of "C" for a respective pixel indicates that the center portion of the pixel is powered, and a value of "R" for the respective pixel indicates that the right portion of the pixel is powered.

Thus, in the example of Fig. 3, for pixel 1, the power indicated by the respective PWM values in column 320 is applied to the center portion of pixel 1; for pixel 2, the power indicated by the respective PWM values in column 322 is applied to the left portion of pixel 2; and for pixel 5, the power indicated by the respective PWM values in column 324 is applied to the right portion of pixel 5.

To reduce storage space consumed by the halftone table 300, not all grey levels are populated in the halftone table 300. For example, grey levels 1-15 are missing from the halftone table 300. The missing values can be linearly interpolated between the neighboring rows. For example, for any respective grey level of grey levels 1-15, a linear interpolation can be performed to derive the PWM value for the respective grey level based on the PWM value in row 314 for grey level 0 and the PWM value in row 318 for grey level 16. Thus, for pixel 1, for example, a linear interpolation is performed between PWM value 0 and PWM value 155 to obtain the PWM values for grey levels 1-15, respectively.

The grey levels in successive rows of the halftone table 300 do not have to be evenly spaced. Although successive rows of the halftone table 300 represent grey levels that increment by 16, in other examples, the grey level increment between a first pair of successive rows of the halftone table 300 can differ from the grey level increment for another pair of successive rows of the halftone table 300.

The halftone table 300 can be manually created, or can be created using an algorithm or program. In some examples, an initial halftone table 300 may not have a target tone curve. For example, in Fig. 4, a target tone curve is represented as 402. The horizontal axis of the plot shown in Fig. 4 represents grey levels between 0 and 255 (or alternatively, between a normalized low value or a normalized high value). The vertical axis of the plot shown in Fig. 4 represents a "darkness" or "colorfulness" of a given color (indicated as "dE" or CIELab ΔE).

The initial halftone table 300 may have an "un-tuned" tone curve 404 that deviates from the target tone curve 402. An "un-tuned" tone curve refers to any tone curve that deviates from the target tone curve 402 by greater than some threshold amount.

The PWM values of the halftone table 300 can be manually or programmatically adjusted to adjust the un-tuned halftone curve 404 toward the target tone curve 402.

In some implementations of the present disclosure, it is desired that the information relating to halftoning that is stored in the memory device 108 of the printing device component 106 of Fig. 1 be constructed in a way such that the information relating to halftoning take up a smaller amount of memory capacity of the memory device 108. In the example of Fig. 1, the compressed halftone data 110 stored in the memory device 108 is based on a difference table that is derived form a difference between a target halftone table and a reference halftone table (referred to as a "reference table" 122 in Fig. 1). The reference table 122 can be stored in the storage medium 118 of the printing device 100. The "target" halftone table can refer to a halftone table that has been tuned (adjusted) so that the tone curve of the halftone table matches a target tone curve (e.g., 402) to within a specified tolerance.

By basing the compressed halftone data 110 on a difference table (that is a difference between the target halftone table and the reference halftone table), the number of bits that are used to represent the compressed halftone data 110 can be reduced as compared to a case where the compressed halftone data 110 is based on the target halftone table.

In some examples, an un-tuned halftone table (initially created manually or by a program or algorithm) can be used as the reference table 122. In other examples, an average or some other aggregate of multiple un-tuned halftone tables can be used as the reference table 122. The multiple un-tuned halftone tables may have been derived from different sources, such as one that is manually created and another one created using an algorithm or program. In other examples, the reference table 122 can be from a different source.

### Constructing information relating to halftoning

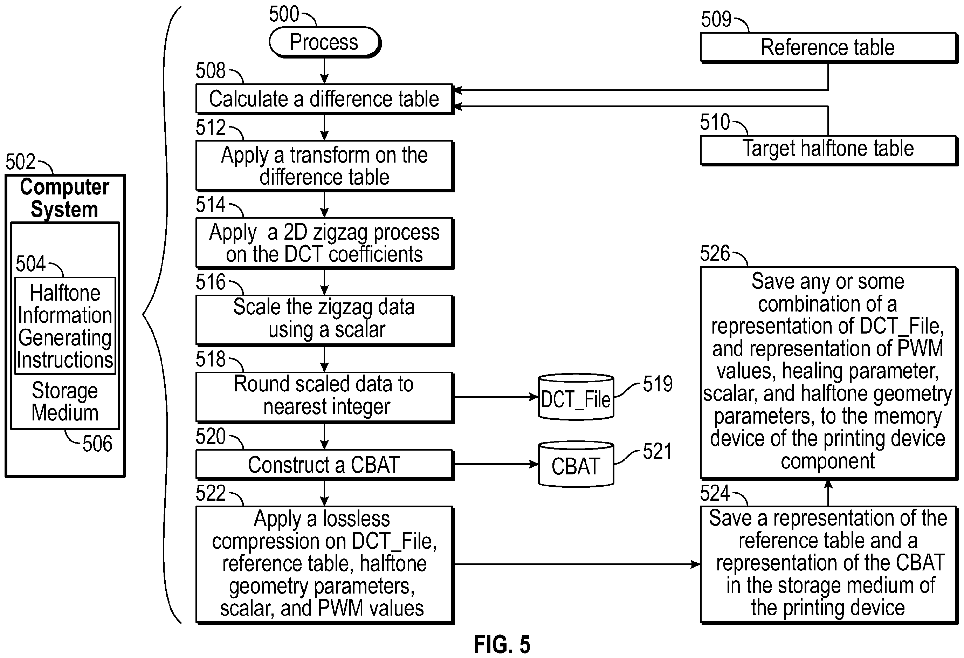

Fig. 5 is a flow diagram of a process 500 of constructing information relating to halftoning, according to some examples. The process 500 can be performed by a computer system 502 implemented using a computer or multiple computers. More specifically, the process 500 can be performed by halftone information generating instructions 504 stored in a storage medium 506 of the computer system 502. The halftone information generating instructions 504 are executable by a hardware processor (or multiple hardware processors) of the computer system 502 to perform the tasks of the process 500.

The computer system 502 can be a system that is distinct and separate from the printing device 100, in some examples.

The process 500 includes calculating (at 508) a difference table based on a difference between a target halftone table 510 and a reference table 509. The target halftone table 510 can be a tuned halftone table as discussed above. The difference table includes multiple entries (having a format similar to the entries of the halftone table 300 shown in Fig. 3), where each difference entry represents a difference of a value of an entry of the target halftone table 510 and a corresponding entry of the reference table 509.

The process 500 applies (at 512) a transform on the difference table. In some examples, the transform is a discrete cosine transform (DCT), which expresses a finite sequence of data points in terms of a sum of cosine functions oscillating at different frequencies. In other examples, other types of transforms can be applied on the difference table, including as examples, a Set Partition In Hierarchical Trees (SPIHT) transform, a Set Partitioned Embedded bloCK (SPECK) transform, and so forth.

In some examples, applying DCT to the difference table produces a set of coefficients that can be further processed to generate a set of compressed coefficients (as discussed further below). A difference table that has M entries will lead to M coefficients responsive to application of DCT on the difference table. The coefficients produced by the application of DCT on the difference table are referred to as DCT coefficients.

In some examples, the process 500 can apply (at 514) a 2D zigzag process on a diagonal of the DCT coefficients.

The output of the DCT applied (at 512) includes DCT coefficients arranged as a matrix of DCT coefficients, having a similar format as the halftone table 300 of Fig. 3. DCT converts the difference table to a representation in the frequency domain. As part of the DCT, the DCT coefficients are sorted by frequency. In the matrix of DCT coefficients that are in the frequency domain, the DCT coefficients at the lower frequencies are included in the upper left corner of the matrix, and the DCT coefficients at the higher frequencies are included in the lower right corner of the matrix.

The zigzag process applied (at 514) receives as input the matrix of DCT coefficients and returns a one-column, N-row array (where N represents the number of rows of the matrix of DCT coefficients and is computed as Nrows x Ncols, where Nrows is the number of rows of the matrix and Ncols is the number of columns of the matrix) using a zigzag order. The top row of the one-column, N-row array will have the DCT data at the lowest frequency, and the bottom row of the one-column, N-row array will have the DCT data at the highest frequency.

The output of the 2D zigzag process applied (at 514) is referred to as zigzag data. The zigzag data includes DCT coefficients reordered according to the zigzag process.

The process 500 scales (at 516) the zigzag data using a scalar (e.g., scalar 115 in Fig. 5), by dividing the zigzag data by the scalar. The scalar can be a specified constant value.

Next, the process 500 rounds (at 518) the scaled zigzag data to a nearest integer. The rounding can be a round-up or a round-down process. The combination of the scaling and rounding performed (at 516 and 518) can be considered a quantizing of the zigzag data. The rounding causes the calculated coefficients (in the zigzag data) to be lossy, such that the compressed coefficients produced by the combination of the DCT, the zigzag, scaling, and the rounding is considered to be a lossy compressed coefficients.

The compressed coefficients produced as a result of the rounding (at 518) constitutes an example of the compressed halftone data 110 of Fig. 1. In some examples, the compressed coefficients can be stored in a file or other data structure. For ease of reference, a file in which the compressed coefficients are stored can be referred to as DCT_File 519.

The combination of the DCT, the zigzag, the scaling, and the rounding constitutes an example of a lossy compression that can be applied to the difference table. In other examples, a different lossy compression or other type of compression can be used. For example, the zigzag process can be omitted, or a transform different from DCT can be applied, or the scaling can be omitted, or the rounding can be omitted.

The process 500 further constructs (at 520) a coefficient bit assignment table (CBAT) 521, which is used to decode the quantized coefficients. The CBAT stores information related to how many bits are assigned to each quantized coefficient.

For example, ^{┌}*log₂L*^{┐} bits can be used to quantize a real number in the range -0.5 to *L* - 0.5 to an integer value (as part of the scaling and rounding performed at 516 and 518), in which ┌*log₂(L)*┐ represents a ceiling function of the base-2 logarithm of *L, log₂(L),* and a ceiling function maps the real number to the smallest subsequent integer. An additional bit is provided for the sign in the CBAT because coefficients can be a negative number.

As an example, to calculate the CBAT, a quantized DCT coefficient (in the zigzag data) is denoted as *Q_{i,},* in which i identifies an entry in the zigzag data. The number of bits *Bᵢ*, used for *Qᵢ*, is *Bᵢ*, = 0 if *Qᵢ*, is 0 and *Bij* = ^{┌}*log₂*|*Q*_{*i*,}|^{┐} + 1 if *Qᵢ*, is not 0.

The process 500 applies (at 522) a lossless compression on the DCT_File 519, the reference table 509, the CBAT 521, the halftone geometry parameters (e.g., the Z and W vectors for defining a parallelogram that makes up a halftone cell 202 in Fig. 2), the healing parameters, the scalar, the minimum PWM value, and the maximum PWM value. In some examples, a lossless compression process that can be employed includes a Lempel-Ziv-Markov chain Algorithm process (LZMA), a Gnu-Zip (GZIP) process, or another lossless compression processes.

The process 500 stores (at 524) a representation of the reference table 509 and a representation of the CBAT 521 in the storage medium 118 of the printing device 100 (Fig. 1). Note that the representation of the reference table 509 that is saved can be the smaller of the uncompressed reference table 509 or the losslessly compressed reference table (as compressed at 522). Similarly, the representation of the CBAT 521 that is stored in the storage medium 118 can be the uncompressed CBAT 521 or the losslessly compressed CBAT. The reference table 122 in Fig. 1 is the representation of the reference table 509, and the CBAT 124 in Fig. 1 is the representation of the CBAT 521.

The process 500 also saves (at 526) any or some combination of the following pieces of information to the memory device 108 of the printing device component 106: a representation of the DCT_File 519, and representations of the minimum PWM value, the maximum PWM value, the healing parameter, the scalar, and the halftone geometry parameters. The representation of each respective piece of information of the foregoing pieces of information stored in the memory device 108 can be the smaller of the uncompressed version of the respective piece of information or the losslessly compressed (as compressed at 522) of the respective piece of information. The representations of foregoing pieces of data are stored as 110, 112, 114, 115, and 117 in Fig. 1, for example.

Note that any of the foregoing pieces of information not stored in the memory device 108 can be stored in the storage medium 118. In other examples, the CBAT 124 can be stored in the memory device 108 instead of in the storage medium 118.

### Healing process

The healing parameter 114 (Fig. 1) is used to specify a healing process to use. The healing process is applied due to use of lossy compression in some examples, which can lead to a reconstructed halftone table (reconstructed using the various pieces of information stored in the storage medium 118 and the memory device 108) being different from the original target halftone table 510 (Fig. 5).

Some example halftoning processes use 0 as a minimum PWM value and 255 as a maximum PWM value. More generally, some halftoning processes employ a minimum PWM value and a maximum PWM value. As an example, in the halftone table 300 shown in Fig. 3, for respective grey levels 0 to 255, the respective PWM values applied start at the minimum PWM value of 0 and the maximum PWM value of 255.

For such halftoning processes that employ the minimum PWM value and the maximum PWM value, a healing process can adjust a reconstructed halftone table by setting a starting value in each column of the reconstructed halftone table to the minimum PWM value, and setting an ending value in each column of the reconstructed halftone table to the maximum PWM value.

However, other halftoning processes (such as customized halftoning processes for respective applications), may not employ the minimum PWM value and/or the maximum PWM value. For such other halftoning processes, the starting value of each column of a reconstructed halftone table is not set to the minimum PWM value, and/or the ending value of each column of a reconstructed halftone table is not set to the maximum PWM value.

In some examples, the healing parameter can have a number of bits:
Bit 0: set starting value to minimum PWM value;
Bit 1: set ending value to maximum PWM value;
Bits 2-M (where M ≥ 2): specify type of healing process.

Bits 2-M of the healing parameter can specify any of multiple different healing processes to use. A first value of bits 2-M of the healing parameter can specify use of a first healing process that controls the setting of the starting value and/or ending value of each column of a reconstructed halftone table to the minimum PWM value and/or the maximum PWM value. The first healing process uses the states of bits 0 and 1 of the healing parameter to control the setting of the starting value and the ending value of each column of a reconstructed halftone table.

If bit 0 of the healing parameter has a first state, then the first healing process adjusts the starting value of each column of a reconstructed halftone table that is not already at the minimum PWM value to the minimum PWM value. However, if bit 0 of the healing parameter has a different second state, then the first healing process does not adjust the starting value of each column of a reconstructed halftone table to the minimum PWM value.

Similarly, if bit 1 of the healing parameter has a first state, then the first healing process adjusts the ending value of each column of a reconstructed halftone table that is not already at the maximum PWM value to the maximum PWM value. However, if bit 1 of the healing parameter has a different second state, then the first healing process does not adjust the ending value of each column of a reconstructed halftone table to the maximum PWM value.

A second value of bits 2-M of the healing parameter can specify use of a second healing process that enforces monotonicity in an increase in PWM values along a column of a reconstructed halftone table. As seen in column 322 of the halftone table 300 of Fig. 3, the PWM values increase monotonically from the first row 314 to the last row 316.

Monotonicity means that a curve or function representing a collection of values (in this case the PWM values in a column of a reconstructed halftone table) either continually increases or decreases (but does not change from increasing in value to decreasing in value, or vice versa). The increase in PWM values in a column of a reconstructed halftone table can change rate, or can flatten out, but the increase in PWM values cannot decrease in value. The second healing process enforces monotonicity by modifying any non-monotonic increase in PWM values for a pixel to become monotonic. Because lossy compression is used, the resulting reconstructed halftone table may become non-monotonic in some cases.

Other values of bits 2-M of the healing parameter can specify use of other healing processes, including, for example, another healing process that applies both the first and second healing processes discussed above.

Yet a further value of bits 2-M of the healing parameter can specify that no healing process is to be applied.

### Halftone reconstruction

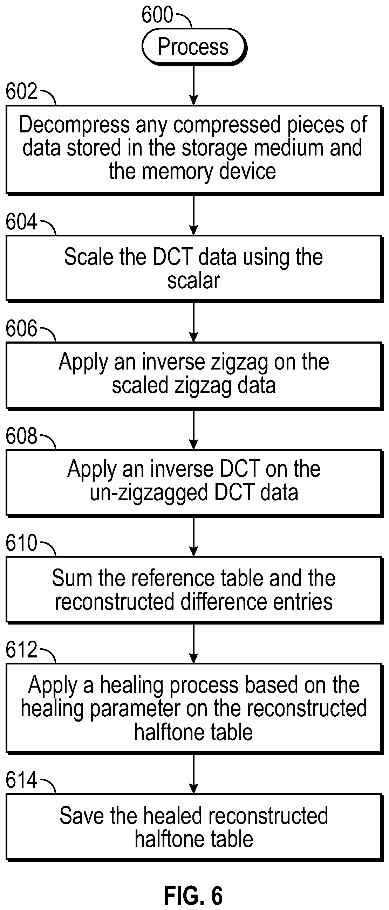

Fig. 6 is a flow diagram of a process 600, which can be performed by the halftoning instructions 120 executed on the processor 116 of the printing device 100, for reconstructing a halftone table according to some examples.

The process 600 decompresses (at 602) any losslessly compressed pieces of information in the storage medium 118 of the printing device 100 and the memory device 108 of the printing device component 106. The pieces of information include the following: the reference table 122, the CBAT 124, the compressed halftone data 110, the minimum and maximum PWM values 112, the healing parameter 114, the scalar 115, and the halftone geometry parameters 117.

The decompressed version of the compressed halftone data 110 is in the form of the DCT data represented by DCT_File 519, and the decompressed version of the CBAT 124 is in the form of the CBAT 521 (Fig. 5).

After the decompression applied (at 602), the process 600 reads the DCT data (in the form of DCT_File 519, for example) using the CBAT 521. The CBAT 521 stores information related to how many bits are assigned to each DCT coefficient of the DCT data, and the process 600 can use this information to read the DCT data.

The process 600 scales (at 604) the DCT data using the scalar, such as by multiplying the DCT data by the scalar.

The process 600 applies (at 606) an inverse zigzag on the scaled DCT data, to produce un-zigzagged DCT data. The process 600 then applies (at 608) an inverse DCT on the un-zigzagged DCT data, to produce reconstructed difference entries (corresponding to the difference entries of the difference table discussed further above).

The process 600 sums (at 610) the reference table 509 with the reconstructed difference entries to reconstruct a reconstructed halftone table.

Based on the healing parameter, the process 600 applies (at 612) a healing process (if any is to be applied) to the reconstructed halftone table, such as by adjusting starting and/or ending values of columns of the reconstructed halftone table to the minimum and/or maximum PWM values, and/or enforcing monotonicity in the PWM values.

The process 600 then saves (at 614) the healed reconstructed halftone table for subsequent use, such as in the storage medium 118 of the printing device 100 (Fig. 1).

There can be multiple halftone tables for different colors. For example, for color printing, different halftone tables can be implemented for cyan, magenta, yellow, and black. Also, for monochromatic printing, another halftone table can be implemented for monochromatic black.

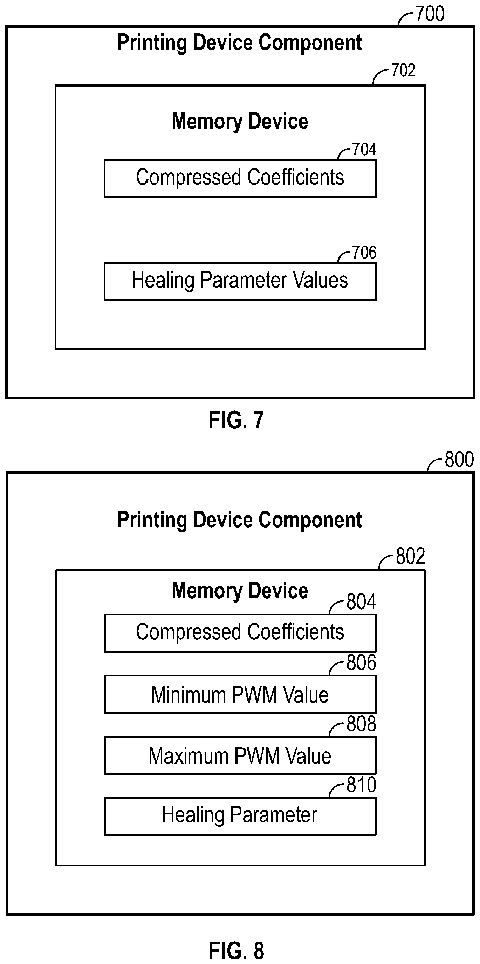

Fig. 7 is a block diagram of a printing device component 700 that includes a memory device 702. The memory device 702 stores compressed coefficients 704 (similar to the compressed halftone data 110 of Fig. 1) that, when decompressed by a printing device, form difference entries, where each difference entry of the difference entries represents a difference of a value of a corresponding entry of a halftone table and a value of a corresponding entry of a reference table.

The memory device 702 also stores healing parameter values 706 (e.g., bits of the healing parameter 114) specifying a healing process to apply to a reconstructed halftone table produced using the coefficients. The coefficients and the healing parameter values are accessible by the printing device to reconstruct a halftone table used in halftone printing by the printing device.

Fig. 8 is a block diagram of a printing device component 800 according to further examples. The printing device component 800 includes a memory device 802 that stores compressed coefficients 804 that, when decompressed by a printing device, form difference entries, where each difference entry of the difference entries represents a difference of a value of a corresponding entry of a halftone table and a value of a corresponding entry of a reference table.

The memory device 802 further stores a minimum PWM value 806 for a pixel, and a maximum PWM value 808 for a pixel.

The memory device 802 further stores a healing parameter 810 specifying a healing process to apply to a reconstructed halftone table produced using the coefficients, and the healing parameter to specify use of one or both of the minimum PWM value and the maximum PWM value by the healing process. The coefficients, the healing parameter, and one or both of the minimum PWM value and the maximum PWM value are accessible by the printing device to reconstruct a halftone table used in halftone printing by the printing device using a print material.

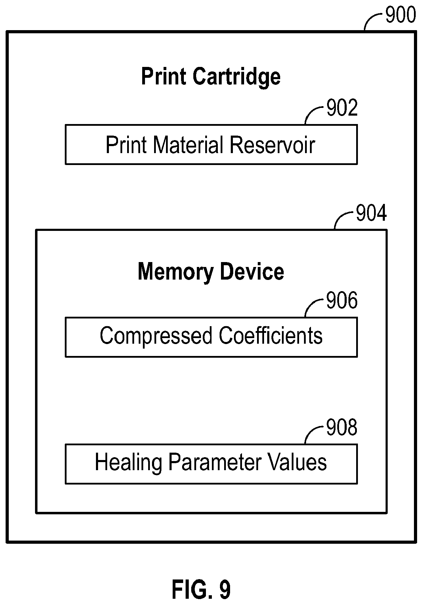

Fig. 9 is a block diagram of a print cartridge 900 including a print material reservoir 902 storing a print material. The print cartridge 900 further includes a memory device 904 storing compressed coefficients 906 that, when decompressed by a printing device, form difference entries, wherein a difference entry of the difference entries represents a difference of a value of a corresponding entry of a halftone table and a value of a corresponding entry of a reference table

The memory device 904 further stores healing parameter values 908 specifying a healing process to apply to a reconstructed halftone table produced using the coefficients. The coefficients and the healing parameter values are accessible by the printing device to reconstruct a halftone table used in halftone printing by the printing device using the print material.

A storage medium (e.g., 118 or 108 in Fig. 1, 506 in Fig. 5, 702 in Fig. 7, 802 in Fig. 8, or 904 in Fig. 9) can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory; a magnetic disk such as a fixed, floppy and removable disk; another magnetic medium including tape; an optical medium such as a compact disc (CD) or a digital video disc (DVD); or another type of storage device. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some of these details. Other implementations may include modifications and variations from the details discussed above. The invention is not limited to the disclosed exemplary embodiments, but by the scope of the following claims.

## Claims

1. A printing device component comprising:
a memory device comprising:
compressed coefficients that, when decompressed by a printing device, form difference entries, wherein a difference entry of the difference entries represents a difference of a value of a corresponding entry of a halftone table and a value of a corresponding entry of a reference table, wherein the entry of the halftone table contains a PWM value that represents the PMW control to be applied to the corresponding pixel; and wherein a row in the halftone table indicates a pixel portion with respect to which power indicated by the PWM value is applied;
a minimum pulse width modulation (PWM) value for a pixel, and a maximum PWM value for a pixel;
a healing parameter specifying a healing process to apply to a reconstructed halftone table produced using the coefficients, and the healing parameter to specify use of one or both of the minimum PWM value and the maximum PWM value by the healing process,
wherein the coefficients, the healing parameter, and one or both of the minimum PWM value and the maximum PWM value are accessible by a printing device to reconstruct a halftone table used in halftone printing by the printing device using a print material.

2. The printing device component of claim 1, wherein the healing process specified by the healing parameter values enforces monotonicity in an increase in PWM values for controlling a pixel.

3. The printing device component of claim 1 or 2, wherein the memory device further
comprises geometry information defining a halftone cell.

4. The printing device component of claim 3, wherein the geometry information defining the
halftone cell comprises vectors defining the halftone cell.

5. The printing device component of any preceding claim, wherein the memory device further comprises a scalar to scale the compressed coefficients to produce scaled compressed coefficients.

6. The printing device component of claim 5, wherein the difference entries are formed based on decompression of the scaled compressed coefficients.

7. The printing device component of claim 6, wherein the difference entries are formed based on the decompression that comprises an inverse zigzag process applied to the scaled compressed coefficients.

8. The printing device component of claim 1, wherein the memory device further comprises a coefficient bit assignment table useable to decode the coefficients

9. The printing device component of claim 8, wherein the coefficient bit assignment table
comprises information related to a number of bits assigned to each of the coefficients.

10. The printing device component of claim 1, wherein the memory device comprises a
compressed version of the compressed coefficients and the healing parameter values.

11. The printing device component of claim 10, wherein the compressed version of the compressed coefficients and the healing parameter values is derived based on a lossless compression of the compressed coefficients and the healing parameter values.

12. The printing device component of claim 1, wherein the compressed coefficients are
derived based on a discrete cosine transform (DCT) on the difference entries.

13. The printing device component of claim 1, further comprising a print material reservoir
storing a print material, wherein the print material comprises a toner or an ink.

## Patentansprüche

1. Druckvorrichtungskomponente, die Folgendes umfasst:
eine Speichervorrichtung, die Folgendes umfasst:
komprimierte Koeffizienten, die, wenn sie durch eine Druckvorrichtung dekomprimiert werden, Differenzeinträge ausbilden, wobei ein Differenzeintrag der Differenzeinträge einer Differenz eines Werts eines übereinstimmenden Eintrags einer Halbtontabelle und eines Werts eines übereinstimmenden Eintrags einer Referenztabelle entspricht, wobei der Eintrag der Halbtontabelle einen PWM-Wert enthält, der der PMW-Steuerung, die dazu dient, auf das übereinstimmende Pixel angewendet zu werden, entspricht; und wobei eine Zeile in der Halbtontabelle einen Pixelteil angibt, in Bezug auf den Leistung, die mittels des PWM-Werts angegeben wird, angewendet wird;
einen minimalen Pulsbreitenmodulations(Pulse Width Modulation - PWM)-Wert für ein Pixel und einen maximalen PWM-Wert für ein Pixel;
einen Heilungsparameter, der ein Heilungsverfahren spezifiziert, das dazu dient, um auf eine rekonstruierte Halbtontabelle, die unter Verwendung der Koeffizienten erzeugt wird, angewendet zu werden, wobei der Heilungsparameter dazu dient, eine Verwendung eines oder beider des minimalen PWM-Werts und des maximalen PWM-Werts mittels des Heilungsverfahrens zu spezifizieren,
wobei auf die Koeffizienten, den Heilungsparameter und einen oder beide des minimalen PWM-Werts und des maximalen PWM-Werts mittels einer Druckvorrichtung zugegriffen werden kann, um eine Halbtontabelle zu rekonstruieren, die bei einem Halbtondrucken mittels der Druckvorrichtung unter Verwendung eines Druckmaterials verwendet wird.

2. Druckvorrichtungskomponente nach Anspruch 1, wobei das mittels der Heilungsparameterwerte spezifizierte Heilungsverfahren die Monotonie in einem Anstieg von PWM-Werten zum Steuern eines Pixels erzwingt.

3. Druckvorrichtungskomponente nach Anspruch 1 oder 2, wobei die Speichervorrichtung ferner Geometrieinformationen umfasst, die eine Halbtonzelle definieren.

4. Druckvorrichtungskomponente nach Anspruch 3, wobei die Geometriedaten, die die Halbtonzelle definieren, Vektoren, die die Halbtonzelle definieren, umfassen.

5. Druckvorrichtungskomponente nach einem der vorhergehenden Ansprüche, wobei die Speichervorrichtung ferner einen Skalar umfasst, um die komprimierten Koeffizienten zu skalieren, um skalierte komprimierte Koeffizienten zu erzeugen.

6. Druckvorrichtungskomponente nach Anspruch 5, wobei die Differenzeinträge auf der Basis einer Dekomprimierung der skalierten komprimierten Koeffizienten ausgebildet werden.

7. Druckvorrichtungskomponente nach Anspruch 6, wobei die Differenzeinträge auf der Basis der Dekompression ausgebildet werden, die ein inverses Zickzackverfahren umfasst, das auf die skalierten komprimierten Koeffizienten angewendet wird.

8. Druckvorrichtungskomponente nach Anspruch 1, wobei die Speichervorrichtung ferner eine Koeffizientenbit-Zuweisungstabelle umfasst, die verwendbar ist, um Koeffizienten zu dekodieren.

9. Druckvorrichtungskomponente nach Anspruch 8, wobei die Koeffizientenbit-Zuweisungstabelle Informationen, die sich auf eine Anzahl von Bits beziehen, die jedem der Koeffizienten zugewiesen sind, umfasst.

10. Druckvorrichtungskomponente nach Anspruch 1, wobei die Speichervorrichtung eine komprimierte Version der komprimierten Koeffizienten und der Heilungsparameterwerte umfasst.

11. Druckvorrichtungskomponente nach Anspruch 10, wobei die komprimierte Version der komprimierten Koeffizienten und der Heilungsparameterwerte auf der Basis einer verlustlosen Komprimierung der komprimierten Koeffizienten und der Heilungsparameterwerte abgeleitet wird.

12. Druckvorrichtungskomponente nach Anspruch 1, wobei die komprimierten Koeffizienten auf der Basis einer eigenständigen Kosinustransformation (Discrete Cosine Transform - DCT) auf den Differenzeinträgen abgeleitet werden.

13. Druckvorrichtungskomponente nach Anspruch 1, die ferner ein Druckmaterialreservoir, das ein Druckmaterial speichert, umfasst, wobei das Druckmaterial einen Toner oder eine Tinte umfasst.

## Revendications

1. Composant de dispositif d'impression comprenant :
un dispositif de mémoire comprenant :
des coefficients compressés qui, lorsqu'ils sont décompressés par un dispositif d'impression, forment des entrées de différence, dans lequel une entrée de différence des entrées de différence représente une différence entre une valeur d'une entrée correspondante d'une table de demi-teintes et une valeur d'une entrée correspondante d'une table de référence, dans lequel l'entrée de la table demi-teintes contient une valeur de modulation de largeur d'impulsion (PWM) qui représente la commande PWM à appliquer au pixel correspondant ; et dans lequel une ligne dans la table de demi-teintes indique une partie de pixel par rapport à laquelle la puissance indiquée par la valeur PWM est appliquée ;
une valeur de modulation de largeur d'impulsion (PWM) minimale pour un pixel, et une valeur PWM maximale pour un pixel ;
un paramètre de rétablissement spécifiant un processus de rétablissement à appliquer à une table de demi-teintes reconstruite produite à l'aide des coefficients, et le paramètre de rétablissement pour spécifier l'utilisation de l'une ou des deux valeurs PWM parmi la valeur PWM minimale et la valeur PWM maximale par le processus de rétablissement,
dans lequel les coefficients, le paramètre de rétablissement et l'une ou les deux valeurs PWM parmi la valeur PWM minimale et la valeur PWM maximale sont accessibles par un dispositif d'impression afin de reconstruire une table de demi-teintes utilisée dans l'impression en demi-teintes par le dispositif d'impression à l'aide d'un matériau d'impression.

2. Composant de dispositif d'impression selon la revendication 1, dans lequel le processus de rétablissement spécifié par les valeurs de paramètre de rétablissement applique une monotonicité dans une augmentation des valeurs PWM permettant de commander un pixel.

3. Composant de dispositif d'impression selon la revendication 1 ou 2, dans lequel le dispositif de mémoire comprend en outre des informations de géométrie définissant une cellule de demi-teinte.

4. Composant de dispositif d'impression selon la revendication 3, dans lequel les informations de géométrie définissant la cellule de demi-teinte comprennent des vecteurs définissant la cellule de demi-teinte.

5. Composant de dispositif d'impression selon une quelconque revendication précédente, dans lequel le dispositif de mémoire comprend en outre un scalaire pour mettre à l'échelle les coefficients compressés afin de produire des coefficients compressés mis à l'échelle.

6. Composant de dispositif d'impression selon la revendication 5, dans lequel les entrées de différence sont formées sur la base d'une décompression des coefficients compressés mis à l'échelle.

7. Composant de dispositif d'impression selon la revendication 6, dans lequel les entrées de différence sont formées sur la base de la décompression qui comprend un processus en zigzag inverse appliqué aux coefficients compressés mis à l'échelle.

8. Composant de dispositif d'impression selon la revendication 1, dans lequel le dispositif de mémoire comprend en outre une table d'attribution de bits de coefficients utilisable afin de décoder les coefficients.

9. Composant de dispositif d'impression selon la revendication 8, dans lequel la table d'attribution de bits de coefficients comprend des informations relatives à un nombre de bits attribués à chacun des coefficients.

10. Composant de dispositif d'impression selon la revendication 1, dans lequel le dispositif de mémoire comprend une version compressée des coefficients compressés et des valeurs de paramètre de rétablissement.

11. Composant de dispositif d'impression selon la revendication 10, dans lequel la version compressée des coefficients compressés et des valeurs de paramètre de rétablissement est dérivée sur la base d'une compression sans perte des coefficients compressés et des valeurs de paramètre de rétablissement.

12. Composant de dispositif d'impression selon la revendication 1, dans lequel les coefficients compressés sont dérivés sur la base d'une transformation en cosinus discrète (TCD) sur les entrées de différence.

13. Composant de dispositif d'impression selon la revendication 1, comprenant en outre un réservoir de matériau d'impression stockant un matériau d'impression, dans lequel le matériau d'impression comprend un toner ou une encre.
